# EUROPÄISCHE PATENTSCHRIFT

(11) **EP 0 658 750 B1**
(45) Veröffentlichungstag und Bekanntmachung des Hinweises auf die Patenterteilung: **09.04.2003**
(21) Anmeldenummer: 94118535.7
(22) Anmeldetag: 25.11.1994
(51) Int. Cl.: G01F 25/00

(54) **Verfahren und Vorrichtung zum Prüfen von Flüssigkeitsvolumenmessern**
Method and device for proving volume flowmeters
Procédé et dispositif pour l'étalonnage des débitmètres volumiques

(30) Priorität: 14.12.1993 DE 4342567
(43) Veröffentlichungstag der Anmeldung: 21.06.1995
(73) Patentinhaber: Hydrometer GmbH, D-91522 Ansbach (DE)
(72) Erfinder: Ziegler, Horst, Prof. Dr., D-33100 Paderborn (DE); Zahn, Robert, Dipl.-Ing., D-91522 Ansbach (DE); Gümpelein, Rudolf, D-91567 Herrieden (DE)
(74) Vertreter: Matschkur, Lindner Blaumeier Patent- und Rechtsanwälte

(56) Entgegenhaltungen:
- EP-A- 0 296 911
- AU-D- 1 262 876
- DE-A- 2 324 613
- DE-A- 3 336 359
- FR-A- 1 128 171
- FLOW MEASUREMENT SYMPOSIUM, PITTSBURG, US, September 26-28,1966; D.S.MOSELEY:"Measurement error in the orifice meter on pulsating water flow"; ASME 1966; pp. 103-123
- TRANSACTIONS OF THE INSTITUTE OF MEASUREMENT AND CONTROL, Bd.10, Nr.3, März 1977, DORKING GB Seiten 106 - 116 A.T.HAYWARD 'Methods of calibrating flowmeters with liquids - a comparative survey'
- ISA TRANSACTIONS, Bd.14, Nr.3, März 1975, PITTSBURGH US Seiten 237 - 247 J.A.BRENNAN ET AL. 'NBS-CGA Cryogenic Flow Measurement Program'

## Beschreibung

Die Erfindung bezieht sich auf ein Verfahren zum Prüfen von Flüssigkeits-Volumenmessern, bei dem im dynamischen Betrieb mit fliegendem Start-Stop eine vorgegebene Mindestmenge der Flüssigkeit durch den zu prüfenden Volumenmesser geleitet und dessen Anzeige mit der durch Wiegen und Umrechnen des durchgeleiteten Flüssigkeitsvolumens bestimmten Soll-Anzeige verglichen wird, wobei der Beginn und das Ende des Prüfvorgangs, d. h. das Auslesen der jeweiligen Waagenstände, in an sich bekannter Weise von jeweils einem Volumenimpuls des zu prüfenden Volumenmessers ausgelöst wird.

Zur Prüfung von Flüssigkeits-Volumenmessern wird stets ein bekanntes (Mindest)-Prüfvolumen bei verschiedenen vorgegebenen, jeweils konstanten Durchflußraten durch den zu prüfenden Volumenmesser geschickt und das von ihm gemessene Volumen mit dem möglichst genau bekannten jeweiligen Prüfvolumen verglichen. Wegen der gesetzlichen Anforderungen und des technischen Standards (Normen) soll der maximale Fehler des Vergleichs kleiner als 0,2 % sein. Darüber hinaus ist derzeit noch beim oberen Durchflußmeßpunkt eine Mindestprüfzeit von einer Minute vorgegeben, die jedoch überwiegend aus dem seitherigen Stand der Prüftechnik gerechtfertigt wird.

Bisher werden Einzel- oder Reihenprüfstände fast immer im Start-Stop-Betrieb mit bekannten und meist fixen Prüfvolumina beaufschlagt und die Ausgangspulse bekannter Soll-Volumenwertigkeit des oder der Volumenmesser während des Durchflusses des Prüfvolumens gezählt. Dabei werden grundsätzlich zwei unterschiedliche Verfahren zur Vorgabe oder Bestimmung des Prüfvolumens eingesetzt, nämlich einmal entweder ein vorgebenes Prüfvolumen, oder aber ein gemessenes Prüfvolumen.

Beim Verfahren mit vorgebenem Prüfvolumen wird ein Prüfbehälter mit bekanntem Volumen als Volumenvorgabe benutzt. Oft ist das Prüfvolumen definiert als Volumen zwischen dem Durchgang der Flüssigkeitsoberfläche von einem Start-Eichstrich bis zu einem Stop-Eichstrich. In diesem Fall kann mit fliegendem Start-Stop gearbeitet werden, wenn die Akkumulation der Prüfpulse des oder der in Reihe geschalteten Volumenmesser mit dem Durchtreten der Wassersäulenoberfläche durch den Start-Eichstrich begonnen und mit dem Durchtreten durch den Stop-Eichstrich gestoppt wird.

Bei Waagenprüfständen mit einem gemessenen Prüfvolumen wird anstelle eines Prüfbehälters ein Auslaufmeßbehälter auf einer Waage eingesetzt. Im Start-Stop-Betrieb wird nach einer Mindestdurchflußdauer mit bekannter Durchflußrate der Durchfluß schlagartig gestoppt und nach einer Beruhigungszeit das Gewicht der durchgetretenen Wassermenge danach mit einer Waage als Gewichtszunahme bestimmt und über die (temperaturabhängige) Dichte des Meßmediums, dabei handelt es sich meist um Wasser, dann das Soll-Prüfvolumen bestimmt. Parallel dazu werden wie bei dem Verfahren mit einem vorgegebenen Prüfvolumen die Volumenpulse des oder der Volumenmesser akkumuliert. Zeitweise wurde dabei auch bereits versucht, auch Waagenprüfstände für dynamischen Betrieb, also mit fliegendem Start-Stop, zu nutzen. Hierzu wird mit Umschaltventilen gearbeitet, die den Prüfdurchfluß entweder in den Waagenbehälter oder in einen Abfluß leiten. Prüfbeginn und Prüfende wird durch die Ansteuerung des Umschaltventils oder der Umschaltklappe erreicht. In allen Fällen konnte aber eine Wägung erst nach einer Beruhigungszeit nach Ende des Gewichtszuwachses vorgenommen werden.

Unabhängig davon, welches der vorstehend beschriebenen Prüfverfahren im einzelnen eingesetzt worden ist, ergibt sich neben der teilweise fehlenden Automatisierbarkeit dieser Verfahren eine lange Prüfdauer bei den (vorgeschriebenen) geringen Prüfdurchflüssen der unteren Meßpunkte der Kennlinie. Volumenmesser erzeugen ihre Volumenpulse elektronisch, mechanisch, optisch oder elektromechanisch. Aus konstruktiven Gründen wie mechanische Lebensdauer, Stromverbrauch elektronischer Systeme, Abtastauflösung berührungslos abtastender (hybrider) Systeme, Baugröße usw. kann die Wertigkeit der abgegebenen Pulse nicht besser sein als das Volumen, das einer Vollumdrehung oder einem kleinen ganzzahligen Vielfachen einer Vollumdrehung entspricht. Die Zählung dieser Ausgangspulse begrenzter Volumenauflösung hat durch die +-1/2 Puls-Unsicherheit jeweils am Beginn und am Ende des Prüfvolumens einen für digitale Systeme charakteristischen +-1-Fehler zur Folge. Daher läßt sich die angestrebte Genauigkeit von 0,2 % nur bei Mindestpulszahlen >500 erreichen. Für diese 500 Volumenpulse sind am untersten Durchflußprüfpunkt Prüfzeiten von bis zu 30 Minuten erforderlich. Bei den Festvolumenprüfständen ergeben sich weiterhin Probleme mit dem an der Wandung des Prüfgefäßes haftenden Restprüfmittel, wegen Schwierigkeiten der genauen zeitlichen Bestimmung des Durchtretens der meniskusgekrümmten Flüssigkeitsoberfläche durch die Eichstriche betrachtet durch das gekrümmte (meist runde) Prüfrohr und schließlich ist die mangelnde Flexibilität der jeweiligen Prüfvolumina durch den jeweils erforderlichen Wechsel der Prüfgefäße problematisch. Bei den Waagenprüfständen im Start-Stop-Betrieb stören die Fehler durch die Anlaufverzögerung und den dynamischen Nachlauf der Prüfobjekte. Beim dynamischen Betrieb, also einem Verfahren der eingangs beschriebenen Art - wie es in ISA TRANSACTIONS, Bd. 14, Nr. 3, März 1975, PITTSBURGH US Seiten 237 - 247, J.A. BRENNAN ET AL. "NBS-CGA Cryogenic Flow Measurement Program" beschrieben ist - ergeben sich Probleme mit der Schaltzeit der Umschaltventile sowie mit Spritzverlusten und erhöhten Verdunstungsverlusten (bei Warmwasserprüfung) sowie mit Verfälschungen des gemessenen Gewichtes durch die einströmende Flüssigkeit.

Der Erfindung liegt daher die Aufgabe zugrunde, ein Prüfverfahren der eingangs genannten Art so auszugestalten und darüber hinaus eine zur Durchführung des Verfahrens geeignete Vorrichtung zu schaffen, daß bei Prüfzeiten unterhalb 60 Sekunden für alle Durchflußbereiche ein universelles, automatisierbares und sicheres Prüfen für alle Arten von Volumenmessern möglich ist.

Zur Lösung dieser Aufgabe ist erfindungsgemäß vorgesehen, daß eine Waage benutzt wird, deren Waagenbehälter mit einem in die Flüssigkeit eintauchenden Einlaufrohr mit radialer Ausströmung versehen ist.

Durch das erfindungsgemäße Verfahren wird bei einer zeitlichen Wägeunsicherheit von 40 Millisekunden bereits bei Prüfzeiten von >= 20 Sekunden der dominierende auflösungsbedingte Fehlerbetrag unabhängig vom Durchfluß kleiner als der geforderte Maximalwert von 0,2 %. Durch den dynamischen Betrieb mit fliegendem Start und verzögertem Prüfbeginn fallen die Fehlerbeiträge durch Anlauf und Auslauf weg. Durch den speziellen Flüssigkeitseinlauf in den Waagenbehälter entfallen systematische Fehler durch die Wasseraufprallkräfte und statistische Fehler durch Spritzen und Turbulenzen werden darüber hinaus stark reduziert.

In Weiterbildung der Erfindung kann vorgesehen sein, daß gleichzeitig eine Mehrzahl von in Reihe geschalteten, vom gleichen Flüssigkeitsstrom durchsetzten Volumenmesser geprüft werden, die ihren Prüfvorgang unabhängig voneinander durch Volumenimpulse auslösen und beenden.

Dabei wird bevorzugt so vorgegangen, daß die Volumenmesser zunächst durchgespült werden und nach einer vorgegebenen Spülphase dem Prüfstandrechner ein allgemeines Bereitsignal bereitgestellt wird, nach dem jeder Volumenmesser unabhängig von den anderen seinen jeweiligen Prüfvorgang durchführt. Dabei liegt es schließlich auch noch im Rahmen der Erfindung, zusätzlich eine Auftriebskorrektur durchzuführen, die wegen der speziellen, das Auftreten dynamischer Kraftkomponenten vermeidenden Einleitung der Flüssigkeit radial unter der Flüssigkeitsoberfläche in den Waagenbehälter erst erforderlich wird. Aus diesem Grund wird erfindungsgemäß das Waagengewicht um die durch die sich verändernde Eintauchtiefe des Einlaufrohrs zum Einleiten der Flüssigkeit in den Waagenbehälter entstehende Reaktionskraft auf den veränderten Auftrieb korrigiert, wobei die Auftriebskorrektur bevorzugt aus dem Einlaufrohrquerschnitt und der aus dem Waagenanzeigenzuwachs errechneten Eintauchtiefenänderung errechnet wird.

Zur Durchführung des erfindungsgemäßen Verfahrens ist bei einer Vorrichtung mit einem Auslaufbehälter, von dem Flüssigkeit durch die in einem Prüfstand angeordneten Volumenmesser geschickt wird, die über ein Einlaufrohr in den Waagenbehälter einer vorzugsweise elektronischen Waage eingeleitet wird, die mit einem Prüfstandrechner gekoppelt ist, an den auch die einzelnen Volumenmesser angeschlossen sind, erfindungsgemäß vorgesehen, daß die Waage Meßzeiten < 40 Millisekunden und eine Genauigkeit besser als 0,1 % aufweist, daß der Waagenbehälter mit einem in die Flüssigkeit eintauchenden Einlaufrohr mit radialer Ausströmung versehen ist, und daß die einzelnen Volumenmesser derart mit dem Prüfstandrechner verbunden sind, daß jeweils ein Volumenimpuls jedes Volumenmessers den Prüfvorgang durch Feststellen des momentanen Waagengewichts startet und ein weiterer vom Prüfstandrechner vorgebbarer Volumenimpuls des Volumenmessers den Prüfvorgang durch Feststellen des nunmehrigen Waagengewichts und des Vergleichs des daraus errechneten Volumens mit der Meßanzeige des Volumenmessers beendet.

Bei elektronischen Volumenmessern mit Digital-Linearisierung nach der Deutschen Offenlegungsschrift DE 36 00 742 A1 hängt das Volumeninkrement je Umdrehung vom Durchfluß ab. Solche Volumenmesser geben ebenfalls einmal je Umdrehung einen Volumenimpuls aus, dessen Wertigkeit sich aber mit dem Durchfluß ändert. Dazu geben sie anstelle eines einfachen Volumenimpulses ein Volumenpulsdatenpaket von 1 bis 3 Byte Länge aus, dessen Zeitpunkt sich aus der vollendeten Vollumdrehung ergibt und dessen Dateninhalt Rückschlüsse auf das Volumeninkrement der jeweiligen Umdrehung enthält. Damit auch derartige elektronisch linearisierte Volumenmesser gemäß dem erfindungsgemäßen Meßverfahren bzw. in einem erfindungsgemäßen Meßstand geprüft werden können, soll der Prüfstandrechner zur Verarbeitung von Pulsen variabler Wertigkeit im Sinne eines Byte-Puls-Verfahrens ausgelegt sein und jeweils nicht nur Pulse fester Volumenwertigkeit zählen, sondern variable Volumeninkremente addieren.

Alternativ zu elektronischen Waagen können auch Balkenwaagen mit dem Waagenbehälter auf der einen Seite und Prüfgewichten auf der anderen Seite sowie einem am Interpolationszeiger befestigten kräftefreien Weg- oder Winkelgeber eingesetzt werden, wenn der Interpolationsmeßbereich dieses Zeigers größer ist als das Gewicht der Flüssigkeitsmenge eines Volumenpulses der Volumenmesser. Dazu wird die Waage mit einem Startgewicht entsprechend dem Gewicht des Durchflußvolumens bis zur Erreichung des Gleichgewichtszustandes auf der Prüfgewichtsseite vorgespannt. Ist dieses Anfangsvolumen durchgeflossen, so erhebt sich die Prüfgewichtsschale aus ihrer Auflage und der kleine Interpolationsmeßbereich des Interpolationszählers ist aktiv.

Daraus wird ein Bereit-Signal abgeleitet. Während der Zeiger nun den Interpolationsbereich durchläuft, wird fortlaufend und schnell der momentane Zeigerstand über den Weg- bzw. Winkelgeber vom Prüfrechner registriert. Beim Auftreten des jeweils nächsten Volumenpulses des oder der Volumenmesser wird dann das jeweilige Interpolationsgewicht festgehalten. Sind alle Volumenmesser gestartet oder ist der Interpolationsbereich durchschritten, so wird auf der Prüfgewichtsseite ein geeichtes Prüfgewicht in der Größenordnung des gewünschten Prüfvolumens aufgelegt und wieder das Abheben dieser Seite aus ihrer Auflage abgewartet. Dem jeweils nächsten Volumenpuls der Volumenmesser wird dann wieder über den Weg- bzw. Winkelgeber des Interpolationszeigers das Endgewicht zugeordnet. Einer der Vorteile dieser Lösung ist der Einsatz eichrechtlich zugelassener Prüfgewichte hoher Genauigkeit und Langzeitstabilität, sowie die wohlbekannten und berechenbaren dynamischen Eigenschaften einer solchen Waage im Gegensatz zu dem oft undefinierten Verhalten elektronischer Wagen bei schnellveränderlichem Gewicht des Waagenbehälters.

Schließlich liegt es auch noch im Rahmen der Erfindung, verschiedene Waagen mit unterschiedlichem Meßbereich und entsprechendem Waagenbehälter mit vergleichbarer relativer Genauigkeit und Wägegeschwindigkeit vorzusehen, die je nach Prüfdurchfluß eingesetzt werden können.

Weitere Vorteile, Merkmale und Einzelheiten der Erfindung ergeben sich aus der nachfolgenden Beschreigung eines Ausführungsbeispiels sowie anhand der Zeichnung. Dabei zeigen:
- Fig. 1: ein schematisches Diagramm des erfindungsgemäßen Prüfvefahrens, und
- Fig. 2: einen schematischen Schnitt durch die beim erfindungsgemäßen Prüfverfahren verwendete Waage.

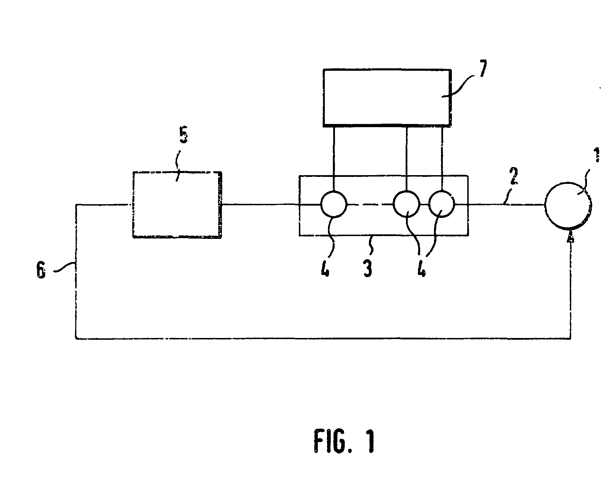

In Fig. 1 ist mit 1 ein Auslaufbehälter angedeutet, von dem über die Leitung 2 eine Meßflüssigkeit, im allgemeinen Wasser, durch den Prüfstand 3 mit einer Vielzahl von hintereinander geschalteten zu prüfenden Volumenmessern 4 geleitet wird. Nachdem die Prüfflüssigkeit die zu prüfenden Volumenmesser 4 durchsetzt hat, wird sie in der Waage 5 gewogen und schließlich über eine Rückführleitung 6 wieder zum Hochbehälter zurückgeleitet. Bei 7 ist der Prüfstandrechner schematisch angedeutet, der mit jedem einzelnen der zu prüfenden Volumenmesser 4 sowie mit der Waage 5 in der vorstehend im einzelnen beschriebenen Weise verbunden ist, um die Volumenmesser einzeln und unabhängig voneinander zu prüfen.

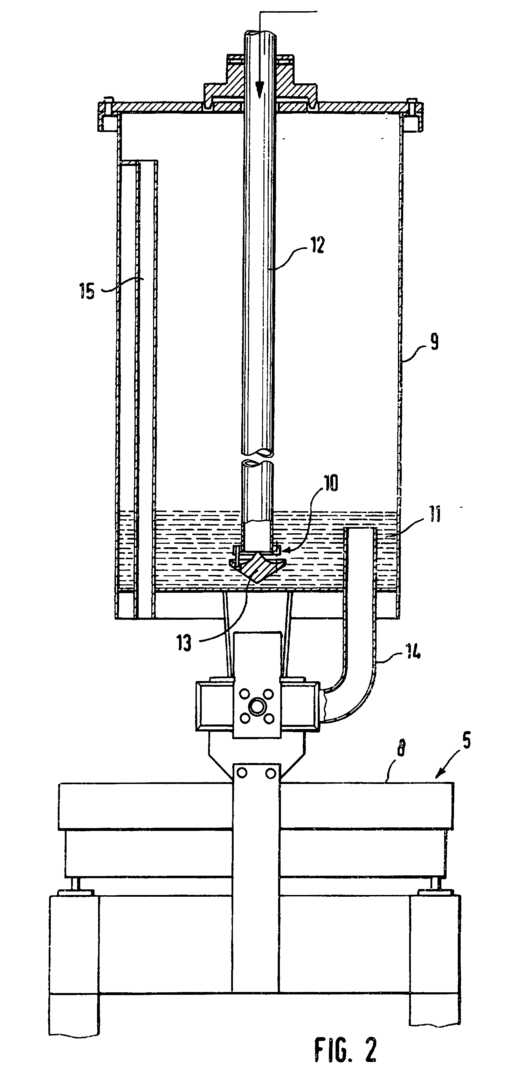

In Fig. 2 ist die Waage 5 näher dargestellt, wobei auf der Waageplattform 8 der Waagenbehälter 9 angeordnet ist, dem die Meßflüssigkeit über ein mit seinem unteren Auslaufende 10 stets in die Flüssigkeit 11 eintauchendes Einlaufrohr 12 zugeführt wird. Um dabei zu vermeiden, daß durch die kinetische Energie der einströmenden Prüfflüssigkeit dynamische Kraftkomponenten auf die Waage ausgeübt werden, ist unter dem Auslauf 10 des Einlaufrohrs 12 eine Prallplatte 13 angeordnet, die die Flüssigkeit im wesentlichen horizontal radial nach außen lenkt. Bei 14 erkennt man den Ablauf zum Entleeren des Waagenbehälters, während bei 15 ein Sicherheitsüberlauf angedeutet ist.

## Patentansprüche

1. Verfahren zum Prüfen von Flüssigkeits-Volumenmessern, bei dem im dynamischen Betrieb mit fliegendem Start-Stop eine vorgegebene Mindestmenge der Flüssigkeit durch den zu prüfenden Volumenmesser (4) geleitet und dessen Anzeige mit der durch Wiegen und Umrechnen des durchgeleiteten Flüssigkeitsvolumens bestimmten Soll-Anzeige verglichen wird, wobei der Beginn und das Ende des Prüfvorgangs, d. h. das Auslesen der jeweiligen Waagenstände, in an sich bekannter Weise von jeweils einem Volumenimpuls des zu prüfenden Volumenmessers (4) ausgelöst wird, **dadurch gekennzeichnet, daß** eine Waage (5) benutzt wird, deren Waagenbehälter (9) mit einem in die Flüssigkeit (11) eintauchenden Einlaufrohr und (12) mit Mitteln zur radialen Ausströmung der Flussigkeit versehen ist.

2. Verfahren nach Anspruch 1, **dadurch gekennzeichnet, daß** gleichzeitig eine Mehrzahl von in Reihe geschalteten, vom gleichen Flüssigkeitsstrom durchsetzten Volumenmesser (4) geprüft werden, die ihren Prüfvorgang unabhängig voneinander durch Volumenimpulse auslösen und beenden.

3. Verfahren nach Anspruch 1 oder 2, **dadurch gekennzeichnet, daß** die Volumenmesser (4) zunächst durchgespült werden und nach einer vorgegebenen Spülphase dem Prüfstandrechner (7) ein allgemeines Bereitsignal bereitgestellt wird, nach dem jeder Volumenmesser unabhängig von den anderen seinen jeweiligen Prüfvorgang durchführt.

4. Verfahren nach einem der Ansprüche 1 bis 3, **dadurch gekennzeichnet, daß** das Waagengewicht um die durch die sich verändernde Eintauchtiefe des Einlaufrohrs (12) zum Einleiten der Flüssigkeit (11) in den Waagenbehälter (9) entstehende Reaktionskraft auf den veränderten Auftrieb korrigiert wird.

5. Verfahren nach Anspruch 4, **dadurch gekennzeichnet, daß** die Auftriebskorrektur aus dem Einlaufrohrquerschnitt und der aus dem Waagenanzeigenzuwachs errechneten Eintauchtiefenänderung errechnet wird.

6. Vorrichtung zur Durchführung des Verfahrens nach einem der Ansprüche 1 bis 5, mit einem Auslaufbehälter (1), von dem Flüssigkeit durch die in einem Prüfstand (3) angeordneten Volumenmesser (4) geschickt wird, die über ein Einlaufrohr (12) in den Waagenbehälter (9) einer vorzugsweise elektronischen Waage (5) eingeleitet wird, die mit einem Prüfstandrechner gekoppelt ist, an den auch die einzelnen Volumenmesser angeschlossen sind, **dadurch gekennzeichnet, daß** die Waage (5) Meßzeiten <40 Millisekunden und eine Genauigkeit besser als 0,1 % aufweist, daß der Waagenbehälter (9) mit einem in die Flüssigkeit eintauchenden Einlaufrohr und (12) mit Mitteln zur radialen Ausströmung der Flüssigkeit versehen ist, und daß die einzelnen Volumenmesser (4) derart mit dem Prüfstandrechner (7) verbunden sind, daß jeweils ein Volumenimpuls jedes Volumenmessers (4) den Prüfvorgang durch Feststellen des momentanen Waagengewichts startet und ein weiterer vom Prüftstandrechner vorgebbarer Volumenimpuls des Volumenmessers (4) den Prüfvorgang durch Feststellen des nunmehrigen Waagengewichts und des Vergleichs des daraus errechneten Volumens mit der Meßanzeige des Volumenmessers (4) beendet.

7. Vorrichtung nach Anspruch 6, **dadurch gekennzeichnet, daß** der Prüfstandrechner zur Verarbeitung von Pulsen variabler Wertigkeit im Sinne eines Byte-Puls-Verfahrens ausgelegt ist.

8. Vorrichtung nach Anspruch 6 oder 7, **dadurch gekennzeichnet, daß** die Waage (5) als Balkenwaage mit dem Waagenbehälter (9) auf der einen Seite und Prüfgewichten auf der anderen Seite sowie einem zur Abtastung der Stellung des Interpolationszeigers dienenden, vorzugsweise an ihm befestigten kräftefreien Weg- oder Winkelgeber ausgebildet ist.

9. Vorrichtung nach einem der Ansprüche 6 bis 8, **dadurch gekennzeichnet, daß** verschiedene Waagen (5) mit unterschiedlichem Meßbereich und entsprechendem Waagenbehälter (9) mit vergleichbarer relativer Genauigkeit und Wägegeschwindigkeit vorgesehen sind, die je nach Prüfdurchfluß eingesetzt werden.

## Claims

1. Method of proving volume flow meters, wherein in dynamic operation with flying start-stop a specified minimum quantity of the fluid is passed through the flow meter (4) and its read-out is compared with the set-point read-out determined by weighing and converting the volume of fluid passed through, the beginning and end of the proving operation, i.e. the read-out of the respective weighing scales, being determined in a manner known *per se* by a respective volume pulse of the flow meter (4) to be proved, **characterised in that** a weighing scale (5) is used whose weighing container (9) is provided with an inlet tube (12) immersed in the fluid (11) and with means for the fluid to flow out radially.

2. Method according to claim 1, **characterised in that** a plurality of flow meters (4) connected in series and traversed by the same stream of fluid are tested simultaneously and start and end their proving operation independently of one another by volume pulses.

3. Method according to claim 1 or 2, **characterised in that** the flow meter (4) are first flushed and after a specified flushing phase a general readiness signal is sent to the test bay computer (7), after which each flow meter carries out its respective proving operation independently of the others.

4. Method according to one of claims 1 to 3, **characterised in that** the weighing scale weight is corrected by the reaction force to the changed upward thrust brought about as a result of the changing immersion depth of the inlet tube (12) in order to introduce the fluid (11) into the weighing container (9).

5. Method according to claim 4, **characterised in that** the correction of upward thrust is calculated from the inlet tube cross section and the change in immersion depth calculated from the increase in the weighing scale read-out.

6. Apparatus for carrying out the method according to one of claims 1 to 5, having an outlet container (1), from which fluid is sent through the flow meter (4) disposed in a test bay (3), the fluid being introduced via an inlet tube (12) into the weighing container (9) of a preferably electronic weighing scale (5), which is coupled to a test bay computer, to which also the individual flow meters are connected, **characterised in that** the weighting scale (5) has measuring times of less than 40 milliseconds and a degree of error of less than 0.1%, **in that** the weighing container (9) is provided with an inlet tube (12) immersed in the fluid and with means for the fluid to flow out radially, and **in that** the individual flow meters (4) are so connected to the test bay computer (7) that a respective volume pulse of each flow meter (4) starts the proving operation by fixing the weight of the weighing scale at that moment, and a further volume pulse of the flow meter (4), specifiable by the test bay computer by fixing the weight of the weighing scale at that time and making a comparison between the volume deduced therefrom, ends with a measurement read-out of the flow meter (4).

7. Apparatus according to claim 6, **characterised in that** the test bay computer is wired for processing pulses of variable valency according to a byte-pulse method.

8. Apparatus according to claim 6 or 7, **characterised in that** the weighing scale (5) is formed as a beam weighing scale with the weighing container (9) on one side and testing weights on the other side and with a force-free distance or phase-angle sensor for detecting the position of the interpolation indicator preferably fixed thereto.

9. Apparatus according to one of claims 6 to 8, **characterised in that** various scales (5) are provided with different ranges of measurement and corresponding weighing containers (9) with comparative relative accuracy and weighing speed, which are used according to the test through-flow.

## Revendications

1. Procédé de vérification de compteurs volumétriques pour liquide, dans lequel, en mode de fonctionnement dynamique avec marche-arrêt volant, une quantité minimale prédéterminée du liquide circule dans le compteur volumétrique à vérifier, et l'affichage de celui-ci est comparé avec un affichage théorique déterminé en pesant et en convertissant le volume de liquide en circulation, le début et la fin du processus de vérification, c'est-à-dire la lecture des états correspondants de la balance, étant déclenchés de façon connue en soi par une impulsion de volume du compteur volumétrique à vérifier (4), **caractérisé en ce qu'**il est utilisé une balance (5) dont le récipient de balance (9) est doté d'un tube d'entrée (12) plongeant dans le liquide (11) et de moyens d'évacuation radiale du liquide.

2. Procédé selon la revendication 1, **caractérisé en ce que** l'on vérifie simultanément plusieurs compteurs volumétriques (4) montés en série et traversés par le même flux de liquide, dont le processus de vérification est déclenché et arrêté indépendamment les uns des autres par des impulsions de volume.

3. Procédé selon la revendication 1 ou 2, **caractérisé en ce que** les compteurs volumétriques (4) sont tout d'abord rincés, puis un signal général « Prêt » est délivré au calculateur (7) du banc d'essai après une phase de rinçage prédéterminée, après quoi chaque compteur volumétrique réalise indépendamment des autres son propre processus de vérification.

4. Procédé selon l'une des revendications 1 à 3, **caractérisé en ce que** le poids indiqué par la balance est corrigé de la force de réaction générée par la profondeur variable du tube d'entrée (12) destiné à introduire le liquide (11) dans le récipient de balance (9), et exercée sur la poussée variable.

5. Procédé selon la revendication 4, **caractérisé en ce que** la correction de poussée est calculée à partir de la section du tube d'introduction et de la variation de profondeur calculée à partir de l'augmentation de l'affichage de la balance.

6. Dispositif de mise en oeuvre du procédé selon l'une des revendications 1 à 5, comportant un récipient d'écoulement (1) envoyant du liquide dans des compteurs volumétriques (4) agencés dans un banc d'essai (3), lequel liquide est introduit par un tube d'entrée (12) dans le récipient (9) d'une balance (5) de préférence électronique qui est couplée à un calculateur du banc d'essai auquel sont également raccordés les compteurs volumétriques individuels, **caractérisé en ce que** la balance (5) présente des temps de mesure inférieurs à 40 ms et une précision supérieure à 0,1%, **en ce que** le récipient de balance (9) est doté d'un tube d'entrée (12) plongeant dans le liquide et de moyens d'évacuation radiale, et **en ce que** les compteurs volumétriques individuels (4) sont reliés au calculateur (7) du banc d'essai de sorte qu'une impulsion de volume délivrée par chaque compteur volumétrique (4) démarre à chaque fois le processus de vérification en déterminant le poids instantané indiqué par la balance, et qu'une autre impulsion de volume, prédéterminée par le calculateur du banc d'essai, délivrée par le compteur volumétrique (4), met fin au processus de mesure en déterminant le poids actuel, et la comparaison du volume calculé à partir de là, avec un affichage de mesure du compteur volumétrique (4).

7. Dispositif selon la revendication 6, **caractérisé en ce que** le calculateur du banc d'essai est conformé de façon à traiter des impulsions de poids variable au sens d'un procédé utilisant des impulsions codées par octets.

8. Dispositif selon la revendication 6 ou 7, **caractérisé en ce que** la balance (5) est conformée en peson doté du récipient de balance (9) d'une part et de poids de contrôle d'autre part, ainsi que d'un capteur angulaire ou de déplacement, soustrait à l'action des forces, et fixé de préférence sur ladite balance servant à détecter la position de l'indicateur d'interpolation.

9. Procédé selon l'une des revendications 6 à 8, **caractérisé en ce qu'**il est prévu différentes balances (5) fonctionnant dans différentes plages de mesure et comportant un récipient de balance correspondant (9) de précision relative et de vitesse de pesage comparables, qui sont utilisées en fonction du débit de test.
